# NEUE EUROPÄISCHE PATENTSCHRIFT

(11) **EP 2 651 204 B2**
(45) Veröffentlichungstag und Bekanntmachung des Hinweises auf die Entscheidung über den Einspruch: **26.05.2021**
(45) Hinweis auf die Patenterteilung: 01.04.2015
(21) Anmeldenummer: 11831819.5
(22) Anmeldetag: 16.12.2011
(51) Int. Cl.: A01B 21/08, A01B 49/02, A01B 5/08

(54) **BODENBEARBEITUNGSGERÄT**
SOIL CULTIVATION DEVICE
APPAREIL DE TRAVAIL DU SOL

(30) Priorität: 17.12.2010 DE 102010054946
(43) Veröffentlichungstag der Anmeldung: 23.10.2013
(73) Patentinhaber: Lemken GmbH & Co. KG, 46519 Alpen (DE)
(72) Erfinder: ACHTEN, Georg, 47918 Tönisvorst (DE)
(74) Vertreter: Hoffmann Eitle
(86) Internationale Anmeldenummer: PCT/DE2011/002155
(87) Internationale Veröffentlichungsnummer: WO 2012/079567

(56) Entgegenhaltungen:
- WO-A2-2008/033091
- US-A- 1 944 275
- US-A- 4 542 793
- US-A1- 2011 132 627
- US-B1- 6 276 462
- US-B1- 6 295 938

## Beschreibung

Die Erfindung bezieht sich auf ein Bodenbearbeitungsgerät mit einem Rahmen mit zwei hintereinander und quer angeordneten Rahmenteilen, an denen nebeneinander drehbar gelagerte Hohlscheiben angeordnet sind, die über Tragarme mit den Rahmenteilen verbunden sind, wobei die Hohlscheiben vorderen Rahmenteils mit den konkaven Seiten in Arbeitsrichtung schräg nach vorn und nach außen weisen und die Hohlscheiben des hinteren Rahmenteils mit den konkaven Seiten in Arbeitsrichtung schräg nach vorn und zur Mitte weisen, wobei die Sehnen der konkaven Seiten der Hohlscheiben mit der Bodenoberfläche einen stumpfen Winkel einschließen.

Ein derartiges Bodenbearbeitungsgerät ist aus der amerikanischen Patentschrift US 1 944 275 bekannt. Bei dem Gegenstand dieser Anmeldung handelt es sich um ein gezogenes Bodenbearbeitungsgerät mit einem Rahmen mit zwei Rahmenteilen, an denen Hohlscheiben mit separaten Lagerungen nebeneinander angeordnet sind. Die Hohlscheiben des vorderen Rahmenteils sind mit den konkaven Seiten schräg nach vorn und nach außen weisend und die Hohlscheiben des hinteren Rahmenteiles sind schräg nach vorn und zur Mitte weisend angeordnet. Bei dieser Lösung wird der Bodenstreifen zwischen den beiden vorderen Hohlscheiben im mittleren Bereich des Bodenbearbeitungsgerätes nicht bearbeitet, was einen ungleichmäßig bearbeiteten Acker hinterlässt, bei dem für die nachfolgenden Arbeitsgänge ein erhöhter Bearbeitsaufwand erforderlich wird, wenn keine Ertragseinbußen in Kauf genommen werden sollen. Der europäischen Patentanmeldung EP 1 449 419 ist ebenfalls ein Bodenbearbeitungsgerät mit einem Rahmen mit zwei Rahmenteilen zu entnehmen, an denen Hohlscheiben mit separaten Lagerungen nebeneinander angeordnet sind. Die Hohlscheiben des vorderen Rahmenteiles sind mit den konkaven Seiten schräg nach vorn und nach außen weisend und die Hohlscheiben des hinteren Rahmenteiles sind schräg nach vorn und zur Mitte weisend angeordnet sind. Der Figur 1 der EP 1 449 419 ist dabei eine Lösung zu entnehmen, bei der die Winkel der mittleren Hohlscheiben so geändert wurden, dass auch im mittleren Bereich des Bodenbearbeitungsgerätes der Boden bearbeitet wird. Dazu wurde der stumpfe Winkel der Sehnen der konkaven Seite der Hohlscheiben zur Bodenoberfläche so geändert, dass er nicht mehr stumpf ist sondern spitz. Die mittleren Hohlscheiben stehen daher nicht mehr auf Griff und können nicht mehr in den Boden einziehen. Sie erzeugen einen Auftrieb, der nur durch das Gewicht des Gerätes und das Einzugsverhalten der restlichen Hohlscheiben überwunden werden kann. In härteren Bodenverhältnissen kann dieser Auftrieb der mittleren Hohlscheiben nicht ausreichend überwunden werden, auch nicht mit erhöhtem Gewicht. Dies führt dazu, dass eine üblicherweise mögliche angestrebte Arbeitstiefe nicht mehr erreicht wird. Dies schränkt den Einsatz des Bodenbearbeitungsgerätes erheblich ein, erst recht, wenn die Hohlscheiben nach längerem Einsatz schon etwas verschlissen sind und sich dadurch der Durchmesser aller Hohlscheiben reduziert.

Die Figur 4 der EP 1 449 419 zeigt eine Lösung, bei der die vorne im mittleren Bereich angeordneten Hohlscheiben in der Winkelstellung nicht verändert wurden. Vielmehr wird hier der nicht bearbeitete Bearbeitungsstreifen zwischen diesen Hohlscheiben der vorderen Reihe von den Hohlscheiben der hinteren Reihe bearbeitet. Wegen der Freiraumprobleme wurde eine der beiden hinteren Hohlscheiben, die mit ihren konkaven Seiten zueinander weisend angeordnet sind, in Arbeitsrichtung nach vorne versetzt angeordnet. Diese Ausführungsform sichert zwar eine relativ gleichmäßige Bearbeitung des Bodens, die aber bei weitem nicht ausreichend ist und nur in Verbindung mit sehr kleinen und sehr steil stehenden Hohlscheiben möglich ist. Auch Verstopfungsprobleme im vorderen Bereich des Gerätes, insbesondere bei viel Bewuchs und größeren Arbeitstiefen können so nicht wirkungsvoll vermieden werden. Ein weiteres Bodenbearbeitungsgerät mit den Merkmalen des Oberbegriffs der Ansprüche 1 und 2 ist aus der WO 2008/033091 bekannt.

Die bekannten Lösungen haben den Nachteil, dass der Boden nicht über die gesamte Arbeitsbreite gleichmäßig bearbeitet wird, dass Verstopfungen aus Freiraumproblemen nicht verhindert werden können und dass der Bodenfluss nicht optimal geführt wird. Dies hat in der Regel die Konsequenz, dass der Boden nachträglich nochmals bearbeitet werden muss, um einen gleichmäßig bearbeiteten Acker bzw. ein ausreichend gutes Saatbett zu erhalten.

Aufgabe der Erfindung ist es, ein entsprechendes Bodenbearbeitungsgerät zu schaffen, das für große Arbeitsgeschwindigkeiten geeignet ist, bei dem die Werkzeuge gleichmäßig über die Arbeitsbreite verteilt sind und den Boden gleichmäßig bearbeiten, das einfach und kompakt aufgebaut ist und das auch verstopfungsfrei arbeitet.

Erfindungsgemäß wird die Aufgabe nach einer ersten Ausführungsform der Erfindung gemäß den Merkmalen des kennzeichnenden Teils von Anspruch 1 oder Anspruch 2 gelöst, wobei in den weiteren Patentansprüchen in vorteilhafter Weise ergänzende und alternative Lösungen beansprucht werden.

Durch das Versetzen der Hohlscheiben im mittleren Bereich des vorderen Rahmenteils können auch größere Hohlscheiben mit stabilen Lagerungen mit geringem seitlichen Abstand zueinander unter Beibehaltung des vorgegebenen optimalen stumpfen Winkels zur Bodenoberfläche angeordnet werden, ohne Einbußen bei der Effektivität in Kauf nehmen zu müssen und ohne die Gefahr, dass Verstopfungen auftreten können. In einer Zeit, in der Intensität und Flächenleistung unverzichtbar sind, müssen auch die ackerbaulichen und pflanzlichen Belange Berücksichtigung finden. Mit der erfindungsgemäßen Lösung kann dies in besonderer Weise umgesetzt werden.

Nach einer zweiten Ausführungsform wird die erfindungsgemäße Aufgabe gemäß den Merkmalen des kennzeichnenden Teils von Anspruch 2 gelöst. Die beiden Hohlscheiben im mittleren Bereich des vorderen Rahmenteils weisen mit ihren konkaven Seiten zueinander und sind in Arbeitsrichtung versetzt zueinander angeordnet. Im Gegensatz zu der Ausführung, bei der die Hohlscheiben des vorderen Rahmenteils den Boden nach außen fördern und die Hohlscheiben des hinteren Rahmenteils den Boden zur Mitte befördern, geschieht dies bei dieser Ausführungsform in umgekehrter Richtung. Die Hohlscheiben des hinteren Rahmenteils schälen den Boden ab und bewegen ihn nach außen. Durch entsprechende Randwerkzeuge wird sichergestellt, dass der Boden so abgelegt wird, dass er nicht über den eigentlichen Arbeitsbereich des Bodenbearbeitungsgerätes hinaus gefördert wird. Auch hier sind die Hohlscheiben im mittleren Bereich des vorderen Rahmenteils versetzt angeordnet, um Verstopfungen zu vermeiden und eine möglichst gleichmäßige Bodenbearbeitung über die gesamte Arbeitsbreite sicherzustellen.

Die Erfindung sieht weiter vor, dass die beiden Hohlscheiben, die im mittleren Bereich des hinteren Rahmenteils mit ihren konvexen Seiten zueinander weisen, in Arbeitsrichtung versetzt zueinander angeordnet sind. Um auch Verstopfungen der Hohlscheiben zu vermeiden, die im mittleren Bereich des hinteren Rahmenteils angeordnet sind, sind auch diese Hohlscheiben versetzt zueinander angeordnet, praktisch aus den gleichen Gründen wie zuvor bereits erwähnt. Gleichermaßen wie zuvor erwähnt sind auch bei dieser alternativen Ausführungsform Niederhalter vorgesehen, die sicherstellen, dass der abgeschälte Boden gezielt abgelegt wird und dass auch die hinter den Niederhaltern angeordneten Werkzeuge in ihrem Arbeitseffekt nicht behindert werden.

Es ist zweckmäßig, wenn der Versatz zwischen den versetzt angeordneten Hohlscheiben in Arbeitsrichtung einem Maß von 5 cm und mehr entspricht, vorzugsweise einem Maß, das ca. 30 % des Durchmessers einer Hohlscheibe entspricht. Bei selbstfahrenden, angehängten oder aufgesattelten Bodenbearbeitungsgeräten kann der Versatz auch größer gewählt werden. Je größer der Versatz ist, umso mehr kann die Winkelstellung der Hohlscheibe optimiert werden, ohne durch bauliche Belange des Bodenbearbeitungsgerätes in der Effektivität eingeschränkt zu werden. Dies kann aber auf ein Maß so beschränkt werden, dass die Baulänge des Gerätes nicht unnötig groß wird und dadurch auch das erfindungsgemäße Bodenbearbeitungsgerät nicht nur als angehängtes Gerät vorteilhaft eingesetzt werden kann, sondern auch als angebautes Gerät, das ja vom Traktor zeitweise vollständig getragen werden muss. Je nach Durchmesser der Hohlscheibe kann ein Maß von 5 cm ausreichen, wobei in Abhängigkeit von den Bauteilen, wie Tragarm und Lagerung der Hohlscheibe, ein Versatz vorteilhaft ist, der ungefähr 30 % des Durchmessers einer Hohlscheibe entspricht. Bei einem angehängten Bodenbearbeitungsgerät, bei dem die vorhandene Hubkraft des Traktors keine so große Rolle spielt, kann dieser Versatz noch größer sein als 30 % des Durchmessers einer Hohlscheibe.

Nach einer weiteren Ausführungsform der Erfindung ist daran gedacht, dass der Abstand der Zentren der Bearbeitungsquerschnitte zwischen den mit ihren konvexen Seiten zueinander weisenden Hohlscheiben des vorderen Rahmenteils in Arbeitsrichtung gesehen etwa 1,2 bis 3 mal größer ist als der Abstand der Zentren der Bearbeitungsquerschnitte der benachbarten Hohlscheiben des vorderen Rahmenteils zueinander, vorzugsweise 1,5 mal größer. Je nach Zuordnung der Position der Hohlscheiben des hinteren Rahmenteils in Relation zu den Hohlscheiben des vorderen Rahmenteils und damit der Lage der Zentren der Bearbeitungsquerschnitte, wird eine mehr oder weniger gleichmäßige Bodenbearbeitung erzielt. Die beiden Hohlscheiben, die sich im mittleren Bereich des vorderen Rahmenteils befinden, hinterlassen zwischen sich einen unbearbeiteten Bearbeitungsstreifen, der dann entweder von einer oder zwei Hohlscheiben des hinteren Rahmenteils bearbeitet wird. Vorteilhaft ist es, dass zwei Hohlscheiben des hinteren Rahmenteils den verbliebenen unbearbeiteten Bodenstreifen bearbeiten. Somit soll der Abstand zwischen den Zentren der Bearbeitungsquerschnitte der beiden mit ihren konvexen Seiten zueinander weisenden Hohlscheiben 1,5 mal größer sein, als der Abstand der Zentren der Bearbeitungsquerschnitte der benachbarten Hohlscheiben, die unmittelbar nebeneinander angeordnet sind.

Die Erfindung sieht weiter vor, dass die beiden Hohlscheiben, die im mittleren Bereich des hinteren Rahmenteils mit ihren konkaven Seiten zueinander weisen, in Arbeitsrichtung versetzt zueinander angeordnet sind. Mit dieser Maßnahme wird auch im mittleren Bereich des hinteren Rahmenteils sichergestellt, dass die mit ihren konkaven Seiten zueinander weisenden Hohlscheiben sich gegenseitig nicht behindern, aber dennoch im optimalen Abstand zueinander angeordnet sind, um so ein sehr gutes Arbeitsergebnis zu erzielen.

In Bezug auf den Versatz der beiden Hohlscheiben in Arbeitsrichtung ist vorgesehen, dass dieser einem Maß von mindestens 15 cm entspricht, vorzugsweise einem Maß, das ca. 50 % des Durchmessers einer Hohlscheibe entspricht. Bei selbstfahrenden, angehängten oder aufgesattelten Bodenbearbeitungsgeräten kann der Versatz auch größer gewählt werden. In Abhängigkeit von dem Durchmesser der Hohlscheiben und des von der Hohlscheibe abgeschälten Bodens kann schon ein Versatz von etwa 15 cm ein Verstopfen verhindern. In Verbindung mit größeren Hohlscheiben und auch größeren Arbeitstiefen sieht die Erfindung einen Versatz mit einem Maß vor, das etwa 50 % des Durchmessers einer Hohlscheibe entspricht. Je nach Winkelstellung der Hohlscheiben kann ein etwas kleineres oder größeres Maß des Versatzes das Leistungsvermögen des Bodenbearbeitungsgerätes verbessern.

Die Erfindung sieht weiter vor, dass für breit arbeitende oder einklappbare Bodenbearbeitungsgeräte sowohl das vordere Rahmenteil als auch das hintere Rahmenteil mehrteilig ausgebildet ist. Geräte, die mit einer geringen Arbeitsbreite eingesetzt werden, erfordern jeweils nur ein vorderes und ein hinteres Rahmenteil. Bei Geräten mit größerer Arbeitsbreite sieht die Erfindung vor, dass sowohl das vordere Rahmenteil als auch das hintere Rahmenteil mehrteilig ausgebildet ist, um so eine gute Bodenanpassung der einzelnen Hohlscheiben zu gewährleisten. Das gleiche gilt auch für einklappbare Bodenbearbeitungsgeräte. Dass bei Bedarf im Einzelfall auch Bodenbearbeitungsgeräte mit geringer Arbeitsbreite mehrteilige Rahmenteile aufweisen können, schließt die Erfindung nicht aus.

Ein Vorschlag für die Verteilung der Hohlscheiben über das komplette Bodenbearbeitungsgerät sieht vor, dass die Anzahl der an dem Bodenbearbeitungsgerät vorgesehenen Hohlscheiben bei einer geraden Zahl größer als zwanzig ist und nicht durch vier teilbar ist. Aufgrund dieser vergleichsweise hohen Gesamtzahl von Hohlscheiben ist dabei vor allem an Geräte mit großer Arbeitsbreite bzw. klappbare Geräte gedacht. Im Wesentlichen entspricht einer solchen Anordnung ein Gerät mit einer geraden Anzahl von Hohlscheiben in der vorderen Reihe und einer um zwei Scheiben erhöhten Anzahl in der hinteren Reihe. Es kommt dabei vorteilhafterweise zu einer Verschiebung der Symmetriemitte der Hohlscheiben z. B. um einen halben Scheibenabstand. Damit ist ein absolut symmetrisch belastetes Gerät mit ausgewogener Kräfteverteilung geschaffen, bei dem kein Seitenzug oder kein schiefer Nachlauf auftreten kann, wenn links und rechts von der Gerätemitte die gleiche Anzahl von Hohlscheiben sowohl am vorderen Rahmenteil als auch am hinteren Rahmenteil angeordnet ist und z. B. vorne Erdreich von der Mitte nach außen fördern oder hinten Erdreich von außen in Richtung der Gerätemitte fördern.

Was die Stellung der Hohlscheiben betrifft, ist daran gedacht, dass mindestens eine der beiden Hohlscheiben, die im mittleren Bereich des vorderen Rahmenteils angeordnet sind, im Winkel α weniger stumpf angestellt ist als die restlichen Hohlscheiben und den Erdstrom des abgeschälten Bodens so an die dahinter angeordneten Hohlscheiben weitestgehend vorbeileitend ausgebildet ist. Durch das Versetzen der Hohlscheiben im mittleren Bereich sowohl des vorderen Rahmenteils als auch des hinteren Rahmenteils wird der Erdfluss des abgeschälten Bodens im Einzelfall möglicherweise etwas beeinflusst. Dieser Einfluss braucht keine negative ackerbauliche Auswirkung, kann aber eine Auswirkung auf die gleichmäßige Bodenbearbeitung haben, was durch einen geänderten Winkel der Hohlscheiben ausgeglichen werden kann. Durch die geänderte Winkelstellung kann der Erdstrom so geleitet und geführt werden, dass die dahinter angeordneten Hohlscheiben nicht in ihrem Arbeitseffekt behindert werden und auch nicht die Gleichmäßigkeit der Bodenbearbeitung selbst.

Alternativ sieht die Erfindung vor, dass mindestens eine der beiden mittleren Hohlscheiben des vorderen Rahmenteils flacher gewölbt ist als die restlichen Hohlscheiben und der Erdstrom des abgeschälten Bodens dadurch an die dahinter angeordneten Hohlscheiben weitestgehend vorbeigeleitet wird. Um wie zuvor erwähnt den Erdstrom des abgeschälten Bodens durch einen anderen Winkel der Hohlscheiben zur Bodenoberfläche zu optimieren, wird dies nun durch Hohlscheiben bewirkt, die etwas weniger gewölbt sind. Der Erdstrom wird dann ebenfalls so geleitet und geführt, dass die hinteren Hohlscheiben nicht behindert werden und die Gleichmäßigkeit der Bodenbearbeitung nicht eingeschränkt wird.

In Ergänzung zu den bisherigen Maßnahmen ist vorgesehen, dass den Hohlscheiben des vorderen Rahmenteils bzw. der vorderen Rahmenteile und/oder des hinteren Rahmenteils bzw. der hinteren Rahmenteile Niederhalter zugeordnet sind, die hinter den Hohlscheiben angeordnet sind. Diese Niederhalter sind so konzipiert, dass sie den von den Hohlscheiben abgeschälten Boden so führen, dass die nachfolgenden Hohlscheiben, die an den hinteren Rahmenteil angeordnet sind, nicht behindert werden. Das von den Hohlscheiben des vorderen Rahmenteils abgeschälte und seitlich geworfene Erdreich wird von den Niederhaltern aufgefangen und abgelegt. Das Zuordnen von Niederhaltern hinter den Hohlscheiben des hinteren Rahmenteils verhindert, dass nachfolgende Werkzeuge, wie z.B. eine Walze, durch das abgeschälte und aufgeworfene Erdreich behindert werden. Insbesondere bei hohen Arbeitsgeschwindigkeiten ist es nicht möglich, abgeschälten Boden so zu führen, dass nachfolgende Werkzeuge nicht behindert werden. Durch den Niederhalter wird das abgeschälte Erdreich quasi so beruhigt und abgelegt, dass nachfolgende Werkzeuge wie vorgesehen ungehindert ihre Funktion ausüben können. Bei der Variante der Erfindung, bei der sowohl den Hohlscheiben des vorderen Rahmenteils bzw. der vorderen Rahmenteile als auch den Hohlscheiben des hinteren Rahmenteils bzw. der hinteren Rahmenteile Niederhalter zugeordnet sind, die jeweils hinter den Hohlscheiben angeordnet sind, wird grundsätzlich sichergestellt, dass die Werkzeuge, die jeweils hinter einem Niederhalter angeordnet sind, nicht durch den von den Hohlscheiben erzeugten Erdstrom behindert werden und von daher den beabsichtigten Bodenbearbeitungseffekt erreichen.

Es ist weiter vorgesehen, dass die Niederhalter als einteilige oder mehrteilige Abschirmelemente ausgebildet sind, die den von den Hohlscheiben abgeschälten Boden aufnehmen und wieder auf die Bodenoberfläche ablegen, wobei die Abschirmelemente vorzugsweise elastisch ausgebildet sind. Dadurch, dass die Niederhalter bzw. die Abschirmelemente aus Metall oder Kunststoff und z. B. durch Wahl ihres Querschnitts elastisch ausgebildet sind, kann auch in klebrigen Bodenverhältnissen das Erdreich nicht anhaften. Durch das Nachgeben bzw. durch die Bewegung dieser Bauteile fällt aufgefangener Boden sofort wieder ab und wird abgelegt.

Als Niederhalter bzw. als Abschirmelemente sind Leitteile, Zinken oder zum Beispiel auch Striegelzinken vorgesehen, die den von den Hohlscheiben abgeschälten und seitlich verschobenen Boden zumindest zum Teil wieder in die entgegengesetzte Richtung umleiten. Der Boden der ersten Hohlscheibenreihe wird zum Beispiel nach außen gefördert und der Boden, der von den hinteren Hohlscheibenreihen bearbeitet wird, wird zur Mitte gefördert. Im Randbereich des Arbeitsbereiches des Bodenbearbeitungsgerätes können dadurch Rillen oder Furchen verbleiben. Der von den Niederhaltern bzw. den Leitteilen aufgefangene Boden wird daher so seitlich zurückgeführt, dass auch die im äußeren Bereich von den äußersten Hohlscheiben erzeugten Rillen und Furchen wieder mit Boden gefüllt werden und egalisiert werden.

Die Erfindung sieht insbesondere auch vor, dass die Hohlscheiben einen Durchmesser zwischen 50 cm und 75 cm aufweisen, vorzugsweise einen Durchmesser von 60 cm bis 70 cm. Insbesondere bei größeren Durchmessern der Hohlscheiben können auch größere Arbeitstiefen erreicht werden, auch Arbeitstiefen, die normalerweise ein Bodenbearbeitungsgerät wie einen Grubber mit Zinken und Scharen erfordern. In Verbindung mit einem Gerät mit Hohlscheiben in der erfindungsgemäßen Ausführung können Arbeitstiefen erreicht werden wie mit einem Grubber, allerdings mit einem geringeren Zugkraftbedarf, mit größeren Arbeitsgeschwindigkeiten und damit auch mit größeren Flächenleistungen.

Weitere Einzelheiten der Erfindung sind den Figuren und der Figurenbeschreibung zu entnehmen. Es zeigen:
- Figur 1: eine Draufsicht des Bodenbearbeitungsgerätes,
- Figur 2: eine Vorderansicht des Bodenbearbeitungsgerätes,
- Figur 3: eine Seitenansicht des Bodenbearbeitungsgerätes,
- Figur 4: eine Vorderansicht einer Hohlscheibeneinheit und
- Figur 5: eine Draufsicht auf die Hohlscheibeneinheit.

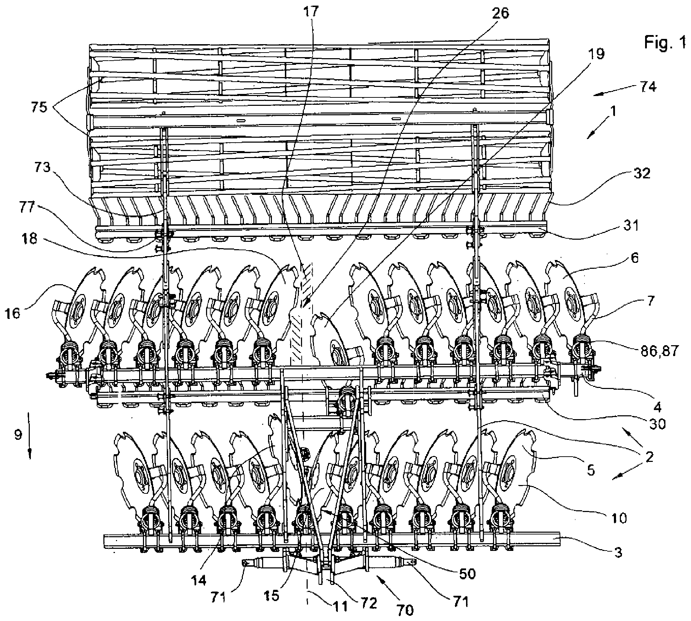

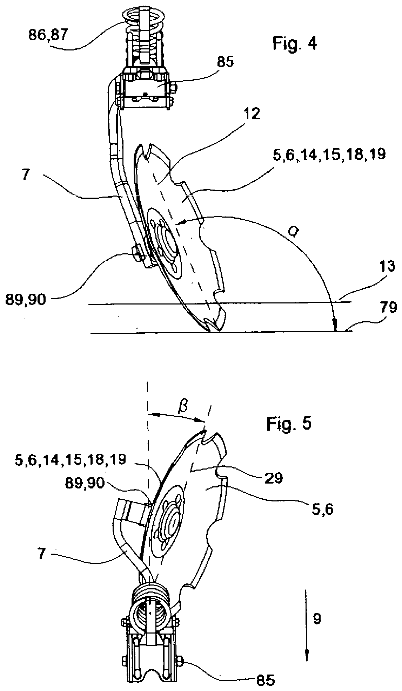

Figur 1 zeigt eine Draufsicht auf das Bodenbearbeitungsgerät 1. Das Bodenbearbeitungsgerät 1 kann ein angehängtes, ein aufgesatteltes oder ein angebautes Bodenbearbeitungsgerät 1 sein. Figur 1 stellt die Ausführungsform eines angebauten Bodenbearbeitungsgerätes 1 dar. Für den Anbau an das Dreipunktgestänge eines nicht dargestellten Traktors dient der Dreipunktturm 70. Der Dreipunktturm 70 weist dafür die Unterlenkeranlenkpunkte 71 und den Oberlenkeranbaupunkt 72 auf. Der Dreipunktturm 70 ist mit dem Rahmen 2 verbunden, der unter anderem aus einem vorderen Rahmenteil 3 und einem hinteren Rahmenteil 4 besteht. An dem vorderen Rahmenteil 3 sind die Hohlscheiben 5 angeordnet; an dem hinteren Rahmenteil 4 die Hohlscheiben 6. Von der Mitte 11 aus gesehen, weisen die konkaven Seiten 10 der Hohlscheiben 5 in Arbeitsrichtung 9 gesehen schräg nach vorn und nach außen. In der Mitte 11 bzw. im mittleren Bereich 50 sind die Hohlscheiben 5, und zwar die Hohlscheiben 14 und 15, so angeordnet, dass sie mit ihren konvexen Seiten 16 zueinander weisen. Die einzelnen Hohlscheiben 5, 14 und 15 sind so angeordnet, dass ihre Sehnen 12 der jeweils konkaven Seite 10 einen stumpfen Winkel α zur Bodenoberfläche 13 einschließen. Dies ist insbesondere auch der Figur 4 zu entnehmen. Im mittleren Bereich 50 befindet sich die Hohlscheibe 14 in einer in Arbeitsrichtung 9 gesehen nach hinten versetzten Stellung. Der Versatz ist dabei so gewählt, dass die tragenden Bauteile der Hohlscheiben 14 und 15, nämlich die Tragarme 7, die Achsen 89 der Hohlscheiben 14 und 15 und die Lagerungen 90 nicht kollidieren können, auch dann nicht, wenn bei Überlastung eine der beiden Hohlscheiben 14 und 15 nach hinten und oben ausweicht. Über eine Feder 86, die Bestandteil einer Überlastsicherung 87 ist, wird die jeweilige Hohlscheibe 5, 14 und 15 in Arbeitsstellung gehalten. Am Rahmen 2 ist auch das hintere Rahmenteil 4 befestigt, das die Hohlscheiben 6 aufnimmt. Die Hohlscheiben 6 sind hier so angeordnet, dass sie mit ihren konkaven Seiten 10 in Arbeitsrichtung 9 schräg nach vorn und zur Mitte 11 weisen. Die Sehnen 12 der konkaven Seiten 10 der Hohlscheiben 6 schließen mit der Bodenoberfläche 13 einen stumpfen Winkel α ein. In der Mitte 11 des hinteren Rahmenteils 4 befinden sich die Hohlscheiben 18 und 19, die mit ihren konkaven Seiten zueinander weisen. Um in dem mittleren Bereich 26 zwischen diesen Scheiben 18 und 19 Verstopfungen zu vermeiden und den Erdfluss zu optimieren, befindet sich die Hohlscheibe 19 in einer nach vorne versetzten Stellung. Zwischen den beiden Hohlscheiben 14 und 15, die am vorderen Rahmenteil 3 angeordnet sind, verbleibt ein unbearbeiteter Bearbeitungsstreifen 17. Dieser hier aus der Mitte heraus versetzte Bearbeitungsstreifen 17 wird von den beiden Hohlscheiben 18 und 19 bearbeitet. Insbesondere bei hoher Arbeitsgeschwindigkeit wird durch die Hohlscheiben 5 und 6 der Boden so aufgeworfen, dass nachfolgende Bodenbearbeitungswerkzeuge in ihrer Funktion behindert werden können. Um dies zu verhindern, befinden sich hinter den Hohlscheiben 5 die Niederhalter 30 und hinter den Hohlscheiben 6 die Niederhalter 31. Die Niederhalter 30 bzw. 31 bestehen hier aus Striegelzinken 32, die so angeordnet sind, dass sie den von den Hohlscheiben 5 und 6 seitlich bewegten Boden weitestgehend wieder in die entgegengesetzte Richtung zurückführen. Der Rahmen 2 trägt nicht nur das vordere Rahmenteil 3 und das hintere Rahmenteil 4, sondern auch die Träger 73, an denen die Walze 74 befestigt ist. Die Walze 74 besteht in diesem Fall aus zwei Walzenkörpern 75. Je nach Bodenart und gewünschtem Arbeitseffekt können auch Walzen eingesetzt werden, die eine größere Packwirkung, Schneidwirkung oder auch Krümelwirkung erzielen.

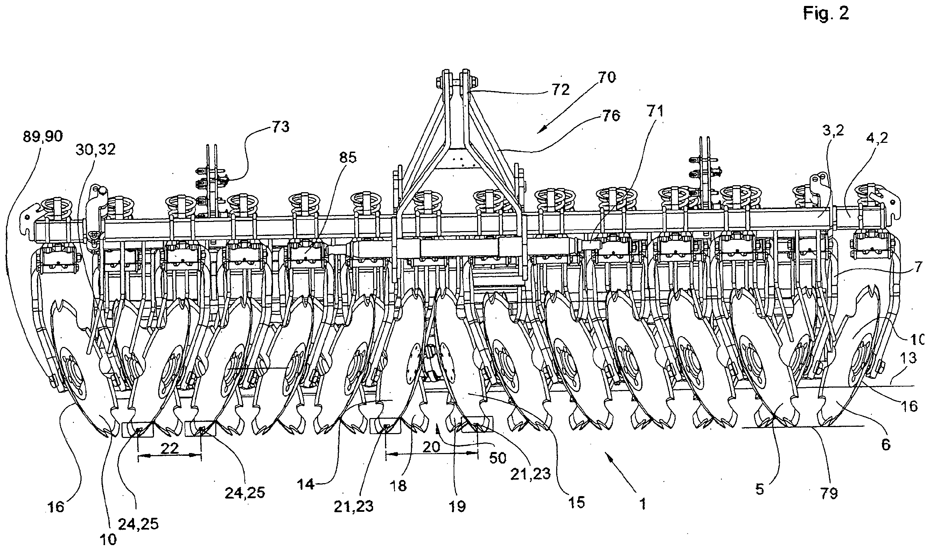

Figur 2 zeigt eine Vorderansicht des Bodenbearbeitungsgerätes 1. Sie verdeutlicht insbesondere, dass die Hohlscheiben 5, 6, 14, 15, 18 und 19 so angeordnet sind, dass der Boden über die gesamte Arbeitsbreite des Bodenbearbeitungsgerätes 1 gleichmäßig bearbeitet wird. Jede der zuvor genannten Hohlscheiben bearbeitet einen Bearbeitungsquerschnitt 23 bzw. 25. Mit 23 sind die Bearbeitungsquerschnitte bezeichnet, die von den Hohlscheiben 14 und 15 bearbeitet werden, die sich im mittleren Bereich 50 des Bodenbearbeitungsgerätes 1 befinden. Mit 25 werden die Bearbeitungsquerschnitte bezeichnet, die von den Hohlscheiben 5 bearbeitet werden, die sich nicht im mittleren Bereich 50 des Bodenbearbeitungsgerätes 1 befinden. Dem jeweiligen Bearbeitungsquerschnitt 23, 25 ist ein Zentrum 21 bzw. 24 zugeordnet. Dabei ist der Abstand 20 zwischen den Zentren 21 von den Bearbeitungsquerschnitten 23 der Hohlscheiben 14 und 15 etwa 1,5 mal größer als der Abstand 22 der Zentren 24 der Bearbeitungsquerschnitte 25. Diese Aufteilung der Hohlscheiben 5,14 und 15 bewirkt, dass im mittleren Bereich 50 ein Bearbeitungsstreifen 17 verbleibt, der von den hinteren Hohlscheiben 18 und 19 bearbeitet wird. Alle Hohlscheiben 5 und 6, 14 und 15 und 18 und 19 sind so angeordnet, dass jede Hohlscheibe einen etwa gleich großen Bearbeitungsquerschnitt 23, 25 bearbeitet, wodurch ein gleichmäßiger Bodenbearbeitungseffekt über die gesamte Arbeitsbreite erzielt wird. In der Figur 2 ist auch die Bodenoberfläche 13 und auch der Bearbeitungshorizont 79 der Hohlscheiben angedeutet. Die Differenz der Höhenlage der Bodenoberfläche 13 und des Bearbeitungshorizontes 79 entspricht der Arbeitstiefe der Hohlscheiben 5 und 6.

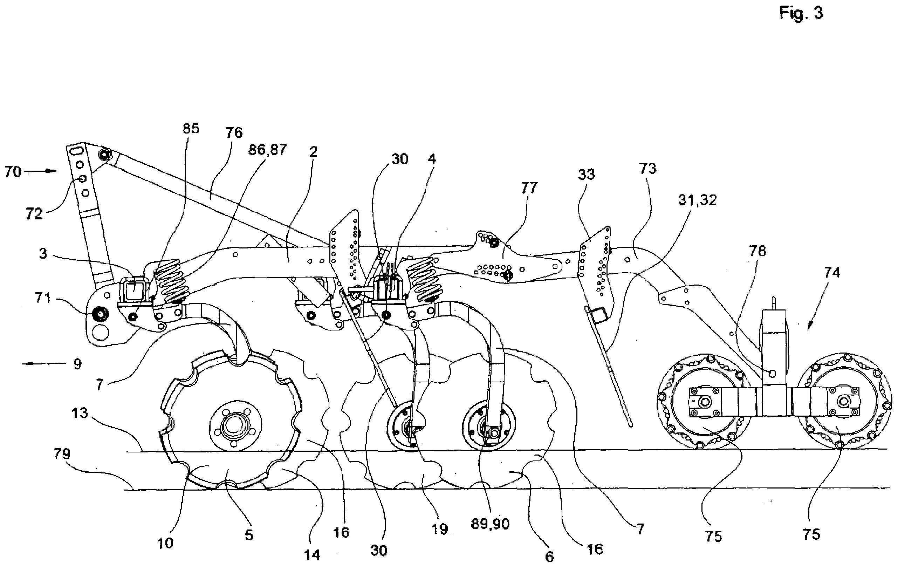

Figur 3 zeigt eine Seitenansicht des Bodenbearbeitungsgerätes 1. Sie verdeutlicht, dass der Dreipunktturm 70 über die Strebe 76 mit dem Rahmen 2 verbunden ist. Auch die Befestigung der Hohlscheiben 5 und 6 mit den Rahmenteilen 3 und 4 über die Achsen 98, Lagerungen 90, Tragarme 7, Schwenkachse 85, Überlastsicherung 87 mit Feder 86 ist der Figur 3 zu entnehmen. Der Versatz in Arbeitsrichtung 9 ist zwischen den Hohlscheiben 14 und 15 bzw. 5 deutlich kleiner als der Versatz zwischen den Hohlscheiben 6 bzw. 18 und 19. Die Niederhalter 30 und 31 mit den Striegelzinken 32 sind so angeordnet, dass sie den Boden, der jeweils durch die Hohlscheiben 5 und 6 aufgeworfen wird, auffangen und auf den Boden ablegen. Die Niederhalter 30 bewirken, dass die Hohlscheiben 6 nicht durch das aufgeworfene Erdreich der Hohlscheiben 5 behindert werden. Die Niederhalter 31 bewirken, dass das von den Hohlscheiben 6 aufgeworfene Erdreich nicht den Lauf der Walze 74 behindert. Angepasst an die jeweilige Funktion sind die Niederhalter 30 und 31 mehr oder weniger dicht zur Bodenoberfläche 13 angeordnet. Die Arbeitstiefe des Bodenbearbeitungsgerätes 1 wird über die Tiefeneinstellung 77 eingestellt. Die Niederhalter 31 bzw. 32 weisen jeweils eine Verstelleinrichtung 33 auf, mit der sie hinsichtlich Winkelstellung und auch Tiefenstellung einstellbar sind.

Eine Vorderansicht einer Hohlscheibeneinheit mit Hohlscheibe 5, 6, 14, 15, 18 oder 19 findet sich in Figur 4. Sie verdeutlicht, wie die Sehne 12 der konkaven Seite 10 der jeweiligen Hohlscheibe einen stumpfen Winkel α zur Bodenoberfläche 13 bzw. zum Bearbeitungshorizont 79 der Hohlscheiben einschließt. Die jeweilige Hohlscheibe weist eine Achse 89 und Lagerung 90 auf, über die sie mit dem Tragarm 7 verbunden ist. Der Tragarm 7 ist über die Schwenkachse 85 mit dem jeweiligen Rahmenteil 3 bzw. 4 verbunden und wird über die Überlastsicherung 87 mit Feder 86 in Arbeitsstellung gehalten. Die erfindungsgemäße Lösung ist denkbar z. B. mit separat gelagerten Hohlscheiben oder zwei gleich großen Hohlscheiben an einem Tragarm 7. Zusätzlich können auch gemeinsam an einem Tragarm 7 gelagerte Hohlscheiben mit zueinander verstellten Achsen und/oder Hohlscheiben mit unterschiedlichen Durchmessern eingesetzt werden.

Figur 5 zeigt eine Draufsicht der Hohlscheibeneinheit, die die Schrägstellung der jeweiligen Hohlscheibe in Arbeitsrichtung 9 verdeutlicht. Die Hohlscheiben 14 und 15, die sich im mittleren Bereich 50 am vorderen Rahmenteil 3 befinden, weisen vorzugsweise einen etwas kleineren Winkel α auf und gegebenenfalls auch einen kleineren Winkel β. Dies bewirkt dann, dass der Erdstrom, der von der Hohlscheibe 14 produziert wird, flacher nach hinten geleitet wird. Durch das Versetzen der Hohlscheibe 14 nach hinten muss dort ein Niederhalter 30 geringfügig anders ausgebildet sein. Um einen gleichbleibenden Bodenbearbeitungseffekt in Summe zu erzielen, muss dazu der Winkel α und eventuell auch der Winkel β der Hohlscheibe geringfügig verändert werden. Eine Hohlscheibe 14 mit etwas weniger Wölbung kann einen ähnlichen Effekt erzielen.

## Patentansprüche

1. Bodenbearbeitungsgerät (1) mit einem Rahmen (2) mit zwei hintereinander und quer angeordneten Rahmenteilen (3, 4), an denen nebeneinander drehbar gelagerte Hohlscheiben (5, 6) angeordnet sind, die über Tragarme (7) mit den Rahmenteilen (3,4) verbunden sind, wobei die Hohlscheiben (5) des in Arbeitsrichtung (9) gesehen vorderen Rahmenteils (3) mit den konkaven Seiten (10) in Arbeitsrichtung (9) schräg nach vorn und nach außen weisen und die Hohlscheiben (6) des in Arbeitsrichtung (9) gesehen hinteren Rahmenteils (4) mit den konkaven Seiten (10) in Arbeitsrichtung (9) schräg nach vorn und zur Mitte (11) weisen, wobei die Sehnen (12) der konkaven Seiten (10) der Hohlscheiben (5,6) mit der Bodenoberfläche (13) einen stumpfen Winkel (α) einschließen,
**dadurch gekennzeichnet,**
**dass** zwei der Hohlscheiben (5), und zwar die beiden Hohlscheiben (14, 15) des vorderen Rahmenteils (3), die sich im mittleren Bereich (50) des vorderen Rahmenteils (3) befinden, mit ihren konvexen Seiten (16) zueinander weisen und in Arbeitsrichtung (9) zueinander versetzt sind und links und rechts vom Bearbeitungsstreifen (17) mindestens einer der beiden nachfolgenden Hohlscheiben (6, 18, 19) des hinteren Rahmenteils (4) angeordnet sind, die mit ihren konkaven Seiten (10) zueinander weisen.

2. Bodenbearbeitungsgerät (1) mit einem Rahmen (2) mit zwei hintereinander und quer angeordneten Rahmenteilen (3, 4), an denen nebeneinander drehbar gelagerte Hohlscheiben (5, 6) angeordnet sind, die über Tragarme (7) mit den Rahmenteilen (3, 4) verbunden sind und dass die Hohlscheiben (6) des in Arbeitsrichtung (9) gesehen vorderen Rahmenteils (3) mit den konkaven Seiten (10) in Arbeitsrichtung (7) schräg nach vorn und zur Mitte (11) weisen und die Hohlscheiben (5) des in Arbeitsrichtung (9) gesehen hinteren Rahmenteils (4) mit den konkaven Seiten (10) in Arbeitsrichtung (9) schräg nach vorn und nach außen weisen und dass die Sehnen (12) der konkaven Seiten (10) der Hohlscheiben (5, 6) mit der Bodenoberfläche (13) einen stumpfen Winkel (α) einschließen,
**dadurch gekennzeichnet,**
**dass** die beiden Hohlscheiben (5) im mittleren Bereich (50) des vorderen Rahmenteils (3) mit ihren konkaven Seiten (10) zueinander weisen und in Arbeitsrichtung (7) versetzt zueinander angeordnet sind.

3. Bodenbearbeitungsgerät nach Anspruch 2,
**dadurch gekennzeichnet,**
**dass** die beiden Hohlscheiben (6), die im mittleren Bereich (26) des hinteren Rahmenteils (4) mit ihren konvexen Seiten (16) zueinander weisen, in Arbeitsrichtung (9) versetzt zueinander angeordnet sind.

4. Bodenbearbeitungsgerät nach Anspruch 1,
**dadurch gekennzeichnet,**
**dass** der Versatz zwischen den versetzten Hohlscheiben (14, 15) in Arbeitsrichtung (9) einem Maß von 5 cm und mehr entspricht, vorzugsweise einem Maß, das ca. 30 % des Durchmessers einer Hohlscheibe (5) entspricht.

5. Bodenbearbeitungsgerät nach Anspruch 1,
**dadurch gekennzeichnet,**
**dass** der Abstand (20) der Zentren (21) der Bearbeitungsquerschnitte (23) zwischen den mit ihren konvexen Seiten (16) zueinander weisenden Hohlscheiben (14) und (15) des vorderen Rahmenteils (3) in Arbeitsrichtung (9) gesehen etwa 1,2 bis 3 mal größer ist als der Abstand (22) der Zentren (24) der Bearbeitungsquerschnitte (25) der benachbarten Hohlscheiben (5) des vorderen Rahmenteils (3) zueinander, vorzugsweise 1,5 mal größer.

6. Bodenbearbeitungsgerät nach Anspruch 1,
**dadurch gekennzeichnet,**
**dass** die beiden Hohlscheiben (18, 19), die im mittleren Bereich (26) des hinteren Rahmenteils (4) mit ihren konkaven Seiten (10) zueinander weisen, in Arbeitsrichtung (9) versetzt zueinander angeordnet sind.

7. Bodenbearbeitungsgerät nach Anspruch 1,
**dadurch gekennzeichnet,**
**dass** der Versatz der beiden Hohlscheiben (18, 19) in Arbeitsrichtung (9) einem Maß von mindestens 15 cm entspricht, vorzugsweise einem Maß, das ca. 50 % des Durchmessers einer Hohlscheibe (6, 18, 19) entspricht.

8. Bodenbearbeitungsgerät nach Anspruch 1,
**dadurch gekennzeichnet,**
**dass** für breit arbeitende oder einklappbare Bodenbearbeitungsgeräte (1) sowohl das vordere Rahmenteil (3) als auch das hintere Rahmenteil (4) mehrteilig ausgebildet ist.

9. Bodenbearbeitungsgerät nach Anspruch 1,
**dadurch gekennzeichnet,**
**dass** die Anzahl der an dem Bodenbearbeitungsgerät (1) vorgesehenen Hohlscheiben (5, 6, 14, 15, 18, 19) bei einer geraden Zahl größer als zwanzig ist und nicht durch vier teilbar ist.

10. Bodenbearbeitungsgerät nach Anspruch 1,
**dadurch gekennzeichnet,**
**dass** mindestens eine der beiden Hohlscheiben (14, 15), die im mittleren Bereich (50) des vorderen Rahmenteils (3) angeordnet sind, im Winkel (α) weniger stumpf angestellt ist als die restlichen Hohlscheiben (5) und den Erdstrom des abgeschälten Bodens so an die dahinter angeordneten Hohlscheiben (18, 19) weitestgehend vorbeileitend ausgebildet ist.

11. Bodenbearbeitungsgerät nach Anspruch 1,
**dadurch gekennzeichnet,**
**dass** mindestens eine der beiden mittleren Hohlscheiben (14, 15) des vorderen Rahmenteils (3) flacher gewölbt ist als die restlichen Hohlscheiben (5) und der Erdstrom des abgeschälten Bodens dadurch an die dahinter angeordneten Hohlscheiben (18, 19) weitestgehend vorbeigeleitet wird.

12. Bodenbearbeitungsgerät nach Anspruch 1,
**dadurch gekennzeichnet,**
**dass** den Hohlscheiben (5) des vorderen Rahmenteils (3) bzw. der vorderen Rahmenteile (3) und/oder des hinteren Rahmenteils (4) bzw. der hinteren Rahmenteile (4) Niederhalter (30, 31) zugeordnet sind, die hinter den Hohlscheiben (5, 6) angeordnet sind.

13. Bodenbearbeitungsgerät nach Anspruch 12,
**dadurch gekennzeichnet,**
**dass** die Niederhalter (30, 31) als einteilige oder mehrteilige Abschirmelemente ausgebildet sind, die den von den Hohlscheiben (5, 6) abgeschälten Boden aufnehmen und wieder auf die Bodenoberfläche (13) ablegen, wobei die Abschirmelemente vorzugsweise elastisch ausgebildet sind.

14. Bodenbearbeitungsgerät nach Anspruch 12,
**dadurch gekennzeichnet,**
**dass** als Niederhalter (30, 31) bzw. als Abschirmelemente Leitteile, Zinken oder zum Beispiel auch Striegelzinken (32) vorgesehen sind, die den von den Hohlscheiben (5, 6) abgeschälten und seitlich verschobenen Boden zumindest zum Teil wieder in die entgegengesetzte Richtung umleiten.

15. Bodenbearbeitungsgerät nach Anspruch 1,
**dadurch gekennzeichnet,**
**dass** die Hohlscheiben (5, 6) einen Durchmesser zwischen 50 cm und 75 cm aufweisen, vorzugsweise einen Durchmesser von 60 cm bis 70.

## Claims

1. Soil cultivation implement (1) with a frame (2) with two frame parts (3, 4) positioned in tandem and obliquely on which rotating hollow discs (5, 6) are positioned in parallel that are connected to the frame parts (3, 4) through support arms (7), whereby the hollow discs (5) of the front frame part (3) seen in the direction of working (9) point obliquely to the front and to the outside with the concave sides (10) in the direction of working (9) and the hollow discs (6) of the rear frame part (4) seen in the direction of working (9) point with the concave sides (10) obliquely to the front and to the centre (11) in the direction of working, whereby the chords (12) of the concave sides (10) of the hollow discs (5, 6) form an obtuse angle (a) with surface of the soil (13), **characterised by the fact**
that two of the hollow discs (5), namely the two hollow discs (14, 15) of the front frame part (3), which are located in the middle section (50) of the front frame part (3), point towards each other with their convex sides (16) and are displaced relatively to each other in the direction of working (9) one at least one of the two following hollow discs (6, 18, 19) of the rear frame part (4) that point towards each other with their convex sides (10) are positioned left and right of the cultivation strip (17).

2. Soil cultivation implement (1) with a frame (2) with two frame parts (3, 4) positioned in tandem and obliquely on which rotating hollow discs (5, 6) are positioned in parallel that are connected to the frame parts (3, 4) through support arms (7), whereby the hollow discs (5) of the front frame part (3) seen in the direction of working (9) point obliquely to the front and to the outside with the concave sides (10) in the direction of working (9) and the hollow discs (6) of the rear frame part (4) seen in the direction of working (9) point with the concave sides (10) obliquely to the front and to the centre (11) in the direction of working (9), whereby the chords (12) of the concave sides (10) of the hollow discs (5, 6) form an obtuse angle (a) with surface of the soil (13), **characterised by the fact**
that the two hollow discs (5) in the middle section (50) of the front frame part (3), point towards each other with their convex sides (10) and are displaced relatively to each other in the direction of working (9).

3. Soil cultivation implement in accordance with Claim 2,
**characterised by the fact**
that the two hollow discs (6) in the middle section (26) of the rear frame part (4), point towards each other with their convex sides (16) and are displaced relatively to each other in the direction of working (9).

4. Soil cultivation implement in accordance with Claim 1,
**characterised by the fact**
that the offset between the two offset hollow discs (14, 15) in the direction of working (9) has a dimension of 5 cm and more, preferably a dimension that corresponds to approx. 30% of the diameter of a hollow disc (5).

5. Soil cultivation implement in accordance with Claim 1,
**characterised by the fact**
that the clearance (20) of the centres (21) of the working cross-sections (23) between the hollow discs (14) and (15) of the front frame part (3) that point towards each other with their convex sides (16) seen in the direction of working (9) is about 1.2 to 3 times greater than the clearance (22) to one another of the centres (24) of the working cross-sections (24) of the adjacent hollow disks (5) of the front frame part (3), preferably 1.5 times greater.

6. Soil cultivation implement in accordance with Claim 1,
**characterised by the fact**
that the two hollow discs (18, 19) that point towards each other in the middle section (26) of the rear frame part with their concave sides (10) are displaced relatively to each other in the direction of working (9).

7. Soil cultivation implement in accordance with Claim 1,
**characterised by the fact**
that the offset of the two hollow discs (18, 19) in the direction of working (9) corresponds to a dimension of at least 15 cm, preferably a dimension that corresponds to approx. 50% of the diameter of a hollow disc (6, 18, 19).

8. Soil cultivation implement in accordance with Claim 1,
**characterised by the fact**
that for wide working or foldable soil cultivation implements (1) both the front frame part (3) and the rear frame part (4) are constructed in several parts.

9. Soil cultivation implement in accordance with Claim 1,
**characterised by the fact**
that the number of hollow discs (5, 6, 14, 15, 18, 19) planned for the soil cultivation implement (1) is an even number greater than twenty and is not divisible by four.

10. Soil cultivation implement in accordance with Claim 1,
**characterised by the fact**
that at least one of the two hollow discs (14, 15) that are arranged in the middle section (50) of the front frame part (3) is set at a less obtuse angle (a) than the other hollow discs (5) and the flow of soil from the peeled earth is thus arranged to be guided to the greatest extent behind the hollow discs (18, 19) arranged behind this.

11. Soil cultivation implement in accordance with Claim 1,
**characterised by the fact**
that at least one of the two hollow discs (14, 15) of the front frame part (3) is curved flatter than the other hollow discs (5) and the flow of soil from the peeled earth is thus arranged to be guided to the greatest extent behind the hollow discs (18, 19) arranged behind this.

12. Soil cultivation implement in accordance with Claim 1,
**characterised by the fact**
that holding-down devices (30, 31) that are arranged behind the hollow discs (5, 6) are allocated to the hollow discs (5) of the front frame part (3) and of the front frame parts (3) and/or of the rear frame part (4) and of the rear frame parts (4).

13. Soil cultivation implement in accordance with Claim 12,
**characterised by the fact**
that the holding-down devices (30, 31) are constructed as single part or multipart screening elements, which take up the soil peeled by the hollow discs (5, 6) and deposit it back on the surface of the soil (13), whereby the screening elements are preferably formed flexibly.

14. Soil cultivation implement in accordance with Claim 12,
**characterised by the fact**
that guide parts, tines or for example harrow tines (32) as well are envisaged as holding-down devices (30, 31) or as screening elements that divert at least part of the soil peeled and pushed to the side by the hollow discs (5, 6) in the opposite direction again.

15. Soil cultivation implement in accordance with Claim 1,
**characterised by the fact**
that the hollow discs (5, 6) have a diameter between 50 cm and 75 cm, preferably a diameter of 60 cm to 70.

## Revendications

1. Appareil de travail du sol (1) avec un cadre (2) possédant deux pièces de cadre (3, 4) disposées l'une derrière l'autre et dans le sens transversal, sur lesquels sont disposés, l'un à côté de l'autre, des disques creux (5, 6) suspendus de façon rotative, qui sont reliés aux pièces de cadre (3,4) par l'intermédiaire de bras porteurs (7), sachant que les disques creux (5) de la pièce de cadre antérieure (3), vue dans le sens du travail (9) ont leurs côtés concaves orientés (10) dans le sens du travail (9) en biais vers l'avant et vers l'extérieur, et que les disques creux (6) de la pièce de cadre postérieure (4), vue dans le sens du travail (9), ont leurs côtés concaves orientés (10) dans le sens du travail (9) en biais vers l'avant et vers le milieu (11), sachant que les tendons (12) des côtés concaves (10) des disques creux (5,6) forment un angle obtus (a) avec la surface du sol (13), **caractérisé par le fait**
**que** deux des disques creux (5), et à savoir les deux disques creux (14, 15) de la pièce de cadre antérieure (3), qui se trouvent dans la zone médiane (50) de la pièce de cadre antérieure (3), ont leurs côtés convexes (16) orientés l'un vers l'autre, et sont décalés l'un par rapport à l'autre dans le sens du travail (9), au moins un des deux disques creux (6, 18, 19) suivants de la pièce de cadre postérieure (4) étant disposé à la gauche et à la droite de la bande de travail (17), lesquels disques creux ont leurs côtés concaves (10) orientés l'un vers l'autre.

2. Appareil de travail du sol (1) avec un cadre (2) possédant deux pièces de cadre (3, 4) disposées l'une derrière l'autre et dans le sens transversal, sur lesquels sont disposés, l'un à côté de l'autre, des disques en creux (5, 6) suspendus de façon rotative, qui sont reliés aux pièces de cadre (3,4) par l'intermédiaire de bras porteurs (7), les disques creux (6) de la pièce de cadre antérieure (3), vue dans le sens du travail (9) ayant leurs côtés concaves (10) orientés dans le sens du travail (9) en biais vers l'avant et vers le milieu (11), et les disques creux (5) de la pièce de cadre postérieure (4), vue dans le sens du travail (9), ayant leurs côtés concaves orientés (10) dans le sens du travail (9) en biais vers l'avant et vers l'extérieur, sachant que les tendons (12) des côtés concaves (10) des disques creux (5,6) forment un angle obtus (a) avec la surface du sol (13),
**caractérisé par le fait**
**que** les deux disques creux (5) dans la zone médiane (50) de la pièce de cadre antérieure (3) ont leurs côtés concaves (10) orientés l'un vers l'autre, et sont décalés l'un par rapport à l'autre dans le sens du travail (9).

3. Appareil de travail du sol selon la revendication 2,
**caractérisé par le fait**
**que** les deux disques creux (6) qui ont leurs côtés convexes (16) orientés l'un vers l'autre dans la zone médiane (26) de la pièce de cadre postérieure (4) ont leurs côtés convexes (16) orientés l'un vers l'autre, et sont décalés l'un par rapport à l'autre dans le sens du travail (9).

4. Appareil de travail du sol selon la revendication 1,
**caractérisé par le fait**
**que** le décalage entre les disques creux (14, 15) décalés dans le sens du travail (9) correspond à une dimension de 5 cm et plus, de préférence à une mesure qui correspond à env. 30 % du diamètre d'un disque creux (5).

5. Appareil de travail du sol selon la revendication 1,
**caractérisé par le fait**
**que** la distance (20) des centres (21) des sections de travail (23) entre les disques creux (14) et (15) de la pièce de cadre antérieure (3) dont les côtés convexes (16) sont orientés l'un vers l'autre est, vue dans le sens du travail (9), environ 1,2 à 3 fois plus grande que la distance (22) des centres (24) des sections de travail (25) des disques creux (5) voisins de la pièce de cadre antérieure (3) entre eux, de préférence 1,5 fois plus grande.

6. Appareil de travail du sol selon la revendication 1,
**caractérisé par le fait**
**que** les deux disques creux (18, 19), dont les côtés concaves (10) sont orientés l'un vers l'autre dans la zone médiane (26) de la pièce de cadre postérieure (4), sont décalés l'un par rapport à l'autre dans le sens du travail (9).

7. Appareil de travail du sol selon la revendication 1,
**caractérisé par le fait**
**que** le décalage des deux disques creux (18, 19) dans le sens du travail (9) correspond à une dimension d'au moins 15 cm, de préférence à une dimension qui correspond à env. 50 % du diamètre d'un disque creux (6, 18, 19).

8. Appareil de travail du sol selon la revendication 1,
**caractérisé par le fait**
**que** pour les appareils de travail du sol (1) travaillant largement ou rabattables, tant la pièce de cadre antérieure (3) que la pièce de cadre postérieure (4) sont constituées de plusieurs pièces.

9. Appareil de travail du sol selon la revendication 1,
**caractérisé par le fait**
**que** le nombre des disques creux (5, 6, 14, 15, 18, 19) prévus sur l'appareil de travail du sol (1) est, dans le cas d'un nombre pair, supérieur à vingt et est divisible par quatre.

10. Appareil de travail du sol selon la revendication 1,
**caractérisé par le fait**
**qu'**au moins un des deux disques creux (14, 15) qui sont disposés dans la zone médiane (50) de la pièce de cadre antérieure (3) dans l'angle (a) est réglé moins aigu que les autres disques creux (5), et est conçu de manière à ce que le courant de terre du sol éventré soit largement détourné de manière à éviter les disques creux (18, 19) disposés derrière.

11. Appareil de travail du sol selon la revendication 1,
**caractérisé par le fait**
**qu'**au moins un des deux disques creux (14, 15) médians de la pièce de cadre antérieure (3) affiche un bombement plus plat que les autres disques creux (5) et que le courant de terre du sol éventré est ainsi largement détourné de manière à éviter les disques creux (18,19) disposés derrière.

12. Appareil de travail du sol selon la revendication 1,
**caractérisé par le fait**
**que** des serre-flans (30, 31) sont attribués aux disques creux (5) de la pièce de cadre antérieure (3) ou des pièces de cadre antérieures (3) et/ou de la pièce de cadre postérieure (4) ou des pièces de cadre antérieures (4), lesquels sont disposés derrière les disques creux (5, 6).

13. Appareil de travail du sol selon la revendication 12,
**caractérisé par le fait**
**que** les serre-flans (30, 31) sont conçus sous la forme d'éléments de blindage en une ou plusieurs pièces, qui absorbent le sol éventré par les disques creux (5, 6) et le redéposent sur la surface du sol (13), sachant que les éléments de blindage sont de préférence conçus de manière élastique.

14. Appareil de travail du sol selon la revendication 12,
**caractérisé par le fait**
**que** des pièces conductrices, des dents ou par exemple aussi des dents de raclage (32) sont prévus en tant que serre-flans (30, 31) et éléments de blindage qui détournent le sol éventré et poussé sur le côté par les disques creux (5, 6), au moins en partie à nouveau dans le sens inverse.

15. Appareil de travail du sol selon la revendication 1,
**caractérisé par le fait**
**que** les disques creux (5, 6) présentent un diamètre compris entre 50 cm et 75 cm, de préférence un diamètre de 60 à 70 cm.
